# EUROPÄISCHE PATENTANMELDUNG

(11) **EP 1 004 525 A1**
(43) Veröffentlichungstag der Anmeldung: **31.05.2000**
(21) Anmeldenummer: 99117773.4
(22) Anmeldetag: 09.09.1999
(51) Int. Cl.: B65G 53/46

(54) **Zellenradschleuse mit Ausziehvorrichtung**

(30) Priorität: 27.11.1998 DE 19854785
(71) Anmelder: Waeschle GmbH, 88250 Weingarten (DE)
(72) Erfinder: Pfeifer, Kurt, 88682 Salem-Beuren (DE); König, Ewald, 88271 Zussdorf (DE); Hemmelmann, Klaus, 88636 Illmensee (DE)

(57) **Zusammenfassung**

Eine Zellenradschleuse umfaßt ein Gehäuse (1) mit einer seitlich durch Lagerdeckel (9, 9') verschließbaren Gehäusebohrung (4), in der ein Zellenrad (6) drehbar gelagert ist, sowie eine sich axial erstreckende Führungsvorrichtung (12), mittels derer das Zellenrad in Richtung seiner Mittelachse (17) aus der Gehäusebohrung ausziehbar ist. Die Führungsvorrichtung weist ein bevorzugt gegenüber dem führungsseitigen Lagerdeckel (9) axial verschiebliches Auflager (16) auf, auf dem das Zellenrad (6) beim Ausziehen vorübergehend abstützbar ist.

Das Auflager (16) ist bevorzugt mit dem führungsseitigen Wellenende (7) des Zellenrades (6) verbindbar.

## Beschreibung

Die Erfindung betrifft eine Zellenradschleuse, umfassend ein Gehäuse mit einer seitlich durch Lagerdeckel verschließbaren Gehäusebohrung, in der ein Zellenrad drehbar gelagert ist, sowie eine sich axial erstreckende Führungsvorrichtung, mittels derer das Zellenrad in Richtung seiner Mittelachse aus der Gehäusebohrung ausziehbar ist.

Derartige Zellenradschleusen werden im allgemeinen zum Fördern oder Dosieren von Schüttgütern aus einem Vorratsbehältnis in eine pneumatische Förderleitung verwendet. Im Rahmen von periodischen Wartungs- und Instantsetzungsarbeiten sowie zum Zwecke der Reinigung der Schleuse, beispielsweise bei einem Wechsel des zu fördernden Schüttgutes, kann es erforderlich sein, das Zellenrad aus der Gehäusebohrung zu entfernen. Um eine hohe radiale Dichtigkeit zu erzielen, ist das Zellenrad nur über einen sehr engen Spalt von der Gehäusebohrung beabstandet. Das Entfernen und der Einbau des Zellenrades haben daher mit großer Sorgfalt zu erfolgen, um die Gehäusebohrung durch Berührung mit den Zellenstegen nicht zu beschädigen.

Bei kleinen Zellenradschleusen kann das Zellenrad unter Umständen noch manuell entnommen werden. Zellenradschleusen mit schweren Zellenrädern werden jedoch häufig mit einer Ausziehvorrichtung versehen, welche das Ausziehen des Zellenrades erleichtert.

Eine derartige gattungsgemäße Zellenradschleuse ist aus der Patentschrift DE 38 18 145 bekannt. Das Zellenrad weist an beiden Stirnflächen Wellenenden auf, über welche es in den die Gehäusebohrung verschließenden Lagerdeckeln gelagert ist. Auf einer Seite des Gehäuses ist eine sich axial erstreckende Führungsvorrichtung angeordnet, die zwei mit dem Gehäuse verbundene Führungsstangen und einen auf diesen verschieblichen Wagen umfaßt, welcher mit dem führungsseitigen Lagerdeckel verschraubt ist.

Das Zellenrad kann gemeinsam mit dem führungsseitigen, das Festlager aufweisenden Lagerdeckel entlang seiner Mittelachse in Richtung der Führungsstangen bewegt werden, wobei das der Führungsvorrichtung gegenüberliegende Wellenende des Zellenrades aus dem im anderen Lagerdeckel befindlichen Loslager herausgezogen wird.

Eine derartig ausgerüstete Zellenradschleuse vermag das unerwünschte Verkanten des Zellenrades bis zu einem gewissen Gewicht desselben zu verhindern. Bei sehr schweren Zellenrädern ist ein einzelnes Festlager jedoch nicht mehr geeignet, das Gewicht des Zellenrades aufzufangen.

Um diesem Mangel abzuhelfen, wird in der Druckschrift DE 41 35 395 A1 vorgeschlagen, in jedem Lagerdeckel voneinander beabstandete Lager anzuordnen, so daß das Zellenrad beim Ausziehen fliegend von zwei Lagern gestützt wird.

Diese Maßnahme führt jedoch beim Betrieb der Schleuse infolge überbestimmter Lagerung dazu, daß bereits geringe Abweichungen in der Flucht der Lager zu einer dauerhaften Biegewechselbelastung der Zellenradwelle und damit zu einem erhöhten Antriebsmoment und zu Dauerbrüchen führen können.

### Aufgabe

Der Erfindung liegt die Aufgabe zugrunde, den Stand der Technik in der Weise weiterzuentwickeln, daß eine Überlastung der Bauteile der Zellenradschleuse sowohl beim Betreiben als auch bei der Reinigung derselben zuverlässig vermieden wird.

### Lösung

Die Aufgabe wird dadurch gelöst, daß die Führungsvorrichtung ein zusätzliches Auflager aufweist, auf dem das Zellenrad beim Ausziehen vorübergehend abstützbar ist.

Bevorzugte Weiterbildungen der Erfindung sind in den Ansprüchen 2 bis 6 angegeben.

### Figuren

Die Figuren stellen beispielhaft und schematisch Ausführungsformen erfindungsgemäß gestalteter Zellenradschleusen dar.

Es zeigen:
- Fig. 1: eine erfindungsgemäße Zellenradschleuse im Betriebszustand
- Fig. 2: dieselbe Zellenradschleuse in Vorbereitung zum Ausziehen des Zellenrades
- Fig. 3: dieselbe Zellenradschleuse mit ausgezogenem Zellenrad
- Fig. 4: eine erfindungsgemäße Zellenradschleuse nach Anspruch 4
- Fig. 5: eine weitere Zellenradschleuse nach Anspruch 5

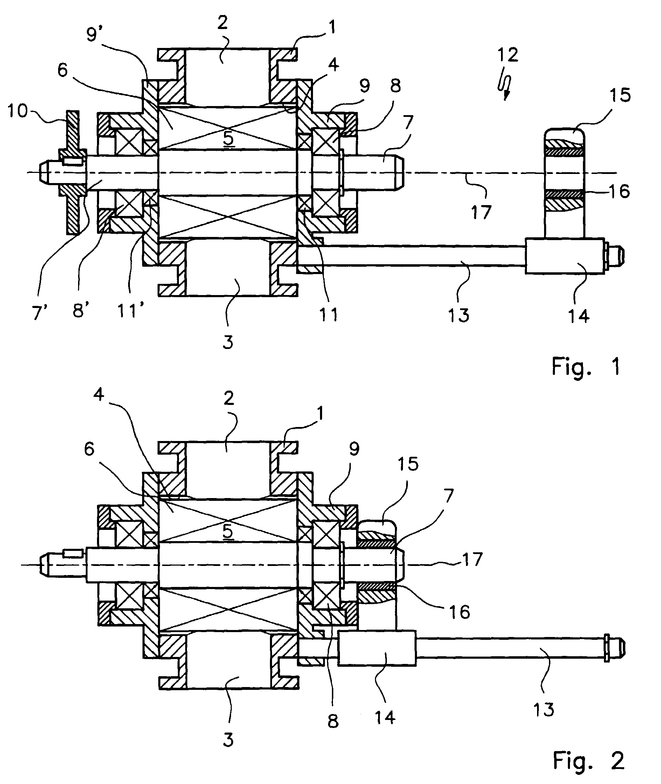

Die in Figur 1 dargestellte Zellenradschleuse besteht aus einem Gehäuse 1 mit einem Zulaufschacht 2 und einem Auslaufschacht 3 für das Schüttgut. In einer Gehäusebohrung 4 ist ein mit sich radial erstreckenden Flügeln 5 versehenes Zellenrad 6 über zwei Wellenenden 7, 7' drehbar gelagert.

Das Wellenende 7 stützt sich über ein als Festlager ausgebildetes Wälzlager 8 im zugehörigen Lagerdeckel 9 ab, während das gegenüberliegende Wellenende über ein als Loslager ausgebildeten Wälzlager 8' in einem weiteren Lagerdeckel 9'gelagert ist. Über das loslagerseitige Wellenende 7' und ein abnehmbares Ritzel 10 wird das Antriebsmoment für das Zellenrad 6 eingeleitet. Dichtungselemente 11, 11' verhindert den Eintritt von Staub aus dem Schüttgut in die Wälzlager 8, 8'.

Am Gehäuse 1 ist eine Führungsvorrichtung 12 mit sich axial erstreckenden Führungssäulen 13 angebracht. Auf den Führungssäulen können der mit dem Festlager versehene Lagerdeckel 9 einerseits und ein von diesem unabhängig bewegbarer Wagen 14 andererseits parallel zur Mittelachse des Zellenrades 6 verschoben werden. Der Wagen 14 ist mit einem Lagerbock 15 versehen, in dem ein Auflager 16 in Gestalt eines Gleitlagers angeordnet ist.

Im Betriebszustand ist das Zellenrad 6 ausschließlich über die zuvor beschriebene Los-/Festlagerkombination gelagert. Geringe Fluchtfehler zwischen den Wälzlagern können vom Lagerspiel in der Regel problemlos ausgeglichen werden.

Fig. 2 zeigt die gleiche Schleuse bei der Vorbereitung zum Ausziehen des Zellenrades 6. Antriebsseitig wurde das Ritzel 10 vom Wellenende 7' gelöst. Führungsseitig ist der Wagen 14 soweit an das Gehäuse 1 herangefahren, daß das Auflager 16 das Wellenende 7 umgreift. Gleichzeitig wurden die (nicht dargestellten) den Lagerdeckel 9 mit dem Gehäuse 1 verbindenden Verschraubungen gelöst.

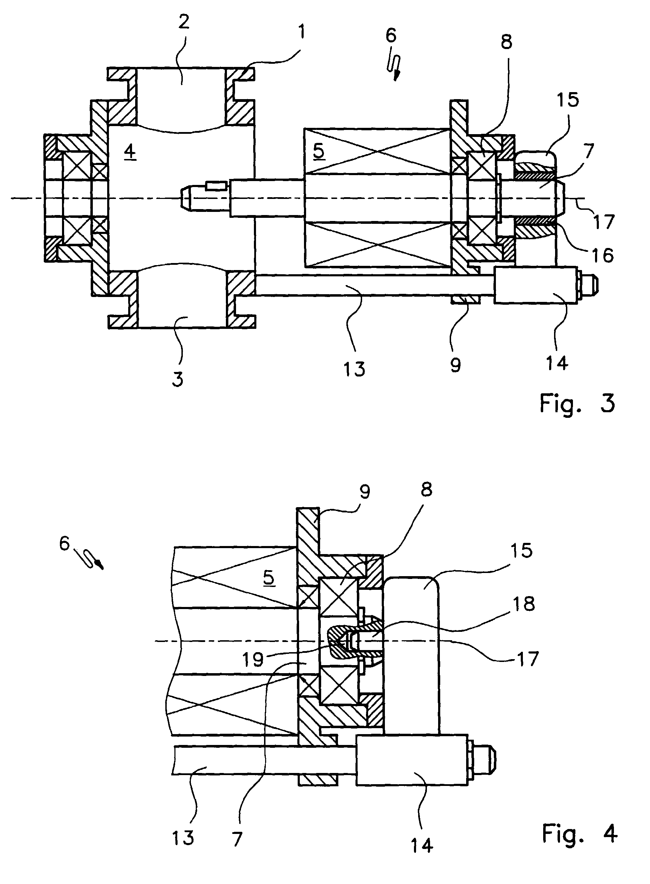

Nachfolgend kann das Zellenrad 6, wie in Figur 3 dargestellt, in Richtung seiner Mittelachse 17 aus der Gehäusebohrung 4 herausgezogen werden. Es stützt sich dabei über das Wellenende 7 sowohl am Wälzlager 8 als auch am zu diesem beabstandeten Auflager 16 ab, wodurch ein unzulässiges Verkanten des Zellenrades 6 in der Gehäusebohrung 4 vermieden wird. Dabei kann es erforderlich sein, den Lagerbock 15 und den Lagerdeckel 9 vorübergehend formschlüssig miteinander zu verbinden, um ein unbeabsichtigtes Herausgleiten des Wellenendes 7 aus dem Auflager 16 zu verhindern, beispielsweise durch eine Verschraubung, Verstiftung oder einen Bajonettverschluß.

Durch das Umgreifen des Wellenendes 7 mit dem Gleitlager 16 bleibt das Zellenrad 6 auch im ausgezogenen Zustand drehbar, wodurch die Reinigung der Flügel 5 erheblich erleichtert wird.

Der Einbau des Zellenrades 6 erfolgt in umgekehrter Reihenfolge.

Abweichend von der zuvor beschriebenen Ausführung wird bei der Zellenradschleuse nach Figur 4 als Auflager ein am Lagerbock 15 angeordneter Zapfen 18 in eine als Längsbohrung ausgebildete Ausnehmung 19 des Wellenendes 7 eingeschoben, über den sich das Zellenrad 6 in ausgebautem Zustand abstützt.

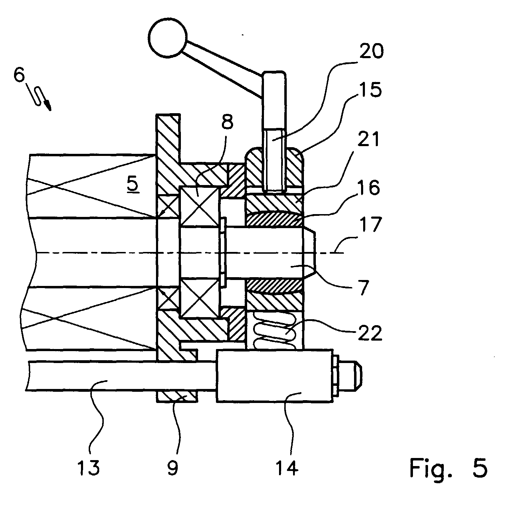

Wird das Zellenrad 6 vollständig aus der Schleuse ausgebaut, kann es beim Wiedereinbau hilfreich sein, seine Lage relativ zur Gehäusebohrung 4 verändern zu können. Der in Figur 5 dargestellte Lagerbock 15 ist mit einer eine Spindel 20, einem Gleitstück 21 und einer Feder 22 umfassenden Verstellvorrichtung für das Auflager 16 versehen. Durch Drehen an der Spindel 20 werden das Gleitstück 21 und das Gleitlager 16 in vertikaler Richtung verstellt, wodurch das Zellenrad 6 anhebbar oder absenkbar ist und exakt in die Gehäusebohrung 4 eingeführt werden kann.

Die Verstellvorrichtung ist ferner grundsätzlich geeignet, das ein Verkanten des Zellenrades 6 bewirkende Spiel im Wälzlager 8 und Auflager 16 beim Ausziehen zu kompensieren. Ihr Einsatz kann daher auch dann sinnvoll sein, wenn ein vollständiger Ausbau des Zellenrades 6 nicht vorgesehen ist.

Der Gegenstand der vorliegenden Erfindung ist nicht auf die Ausführungsbeispiele beschränkt, sondern umfaßt alle vom Fachmann in nicht erfinderischer Weise vorgenommenen Abwandlungen. Insbesondere umfaßt der Begriff der Führungsvorrichtung nicht nur die dargestellten Führungsstangen mit verschieblichen Gleitführungen, sondern jede weitere an sich bekannte Variante, wie schwalbenschwanz- oder rollenartige Führungen. Auch kann sich die Welle des Zellenrades im Lagerbock über beliebige andere Lager, beispielsweise Kugel- oder Nadellager abstützen. Ferner ist auch die Lagerung des Zellenrades in den Lagerdeckeln nicht auf Wälzlager beschränkt, sondern kann beispielsweise auch über Gleitlager erfolgen. Die Form des Zellenrades erschöpft sich nicht in zylindrischen Zellenrädern, vielmehr kann die erfindungsgemäße Vorrichtung auch bei Zellenrädern konischer oder kugelförmiger Gestalt eingesetzt werden. Die vertikale Verstellung des Auflagers kann darüber hinaus selbstverständlich auch mit anderen Mitteln wie exzentrischen Nocken vorgenommen werden.

### Bezugszeichenliste

- 1: Gehäuse
- 2: Zulaufschacht
- 3: Auslaufschacht
- 4: Gehäusebohrung
- 5: Flügel
- 6: Zellenrad
- 7: Wellenende
- 8: Wälzlager
- 9: Lagerdeckel
- 10: Ritzel
- 11: Dichtungselement
- 12: Führungsvorrichtung
- 13: Führungssäule
- 14: Wagen
- 15: Lagerbock
- 16: Auflager
- 17: Mittelachse des Zellenrades
- 18: Zapfen
- 19: Ausnehmung
- 20: Spindel
- 21: Gleitstück
- 22: Feder

## Patentansprüche

1. Zellenradschleuse, umfassend ein Gehäuse (1) mit einer seitlich durch Lagerdeckel (9, 9') verschließbaren Gehäusebohrung (4), in der ein Zellenrad (6) drehbar gelagert ist, sowie eine sich axial erstreckende Führungsvorrichtung (12), mittels derer das Zellenrad in Richtung seiner Mittelachse (17) aus der Gehäusebohrung ausziehbar ist, dadurch gekennzeichnet, daß die Führungsvorrichtung ein zusätzliches Auflager (16) aufweist, auf dem das Zellenrad beim Ausziehen vorübergehend abstützbar ist.

2. Zellenradschleuse nach Anspruch 1, dadurch gekennzeichnet, daß das Auflager (16) gegenüber dem führungsseitigen Lagerdeckel (9) axial verschieblich ist.

3. Zellenradschleuse nach Anspruch 1 oder 2, dadurch gekennzeichnet, daß das Auflager (16) mit dem führungsseitigen Wellenende (7) des Zellenrades (6) verbindbar ist.

4. Zellenradschleuse nach Anspruch 3, dadurch gekennzeichnet, daß das Auflager (16) auf das führungsseitiges Wellenende (7) des Zellenrades (6) aufschiebbar ist.

5. Zellenradschleuse nach Anspruch 3 oder 4, dadurch gekennzeichnet, daß das Auflager (16) in eine Ausnehmung (19) des führungsseitigen Wellenendes (7) des Zellenrades (6) einschiebbar ist.

6. Zellenradschleuse nach einem der vorhergehenden Ansprüche, dadurch gekennzeichnet, daß das Zellenrad (6) durch vertikale Verstellung des Auflagers (16) anhebbar oder absenkbar ist.
